# EUROPEAN PATENT SPECIFICATION

(11) **EP 3 261 925 B1**
(45) Date of publication and mention of the grant of the patent: **21.08.2019**
(21) Application number: 16724108.2
(22) Date of filing: 26.02.2016
(51) Int. Cl.: B64C 39/08, B64C 39/00

(54) **TILTROTOR WITH DOUBLE MOBILE WING**
KIPPROTOR MIT DOPPELTEM BEWEGLICHEN FLÜGEL
CONVERTIBLE À DOUBLE AILE MOBILE

(30) Priority: 27.02.2015 IT PI20150015
(43) Date of publication of application: 03.01.2018
(73) Proprietor: Skybox Engineering S.r.l., 56124 Pisa (IT)
(72) Inventor: FREDIANI, Aldo, 56124 Pisa (IT); CIPOLLA, Vittorio, 00146 Roma (IT); OLIVIERO, Fabrizio, 2611AZ Delft (NL); RIZZO, Emanuele, 50126 Firenze (IT); CAVALLARO, Rauno, 56021 Cascina (PI) (IT)
(74) Representative: Celestino, Marco
(86) International application number: PCT/IB2016/051082
(87) International publication number: WO 2016/135697

(56) References cited:
- WO-A2-2014/058351
- FR-A1- 2 521 521
- US-A1- 2003 080 242
- US-A1- 2011 001 020

## Description

### Field of the invention

The present invention relates to the field of convertiplanes.

In particular, the invention relates to a convertiplane structure with propellers and wings rotating about its own longitudinal axis.

### Description of the prior art

Convertiplanes are known, i.e. aircrafts providing tilting propellers, able to switch between a vertical-axis configuration, where the aircraft, as an helicopter, can take off and land vertically or stand in flight (hovering), and a horizontal-axis configuration with lifting wings, where the propellers provide the thrust necessary to the motion, similarly to the motors of a conventional aircraft.

In particular, there are convertiplanes providing the sole rotation, or "tilting", of the propellers, or convertiplanes providing both the tilting of the propellers and of the wings, both in a coupled way and in an independent way.

An example of this type of drones is shown in US20110001020, where it is claimed a convertible aircraft, or tiltrotor, having a fixed-wing flight mode and a rotary-wing flight mode. The aircraft comprises a fuselage, two couples of wings having aerodynamic cross section connected in tandem to the fuselage and four tilting rotors arranged at the end of the wings. Each rotor has a shaft and at least one blade with an aerodynamic cross section that can rotate in a plane normal to the shaft, independently of the other rotors. The aircraft also comprises means for carrying out and for blocking the rotation of each rotor, according to the flight mode.

Another example of convertiplane wherein there is the rotation both of the wings and of the propellers is shown in ITT020130249, wherein there is also a biplane configuration having wing profiles joined at the ends, where the propellers are located.

However, the solutions exposed above, as most of the existing convertiplanes, provide a single large propeller for each wing. Such propellers create a very high gyroscopic effect compared to the mass of the aircraft, making it difficult the rotation of the wings when passing between the take-off configuration and gliding flight configuration. The gyroscopic effect tends in fact to keep the blades of the propellers in their initial plane of rotation in a way that is directly proportional to the mass and to the length of the blades itself. For this reason, if the mass of aircraft is not sufficient, when it is carried out the rotation of the wings the fuselage risks to rotate in a direction which is opposite to wings.

Furthermore, the use of a single propeller for each wing makes impossible the maneuverability of the aircraft in case of failure of a motor, lowering the level of reliability of the whole aircraft.

An aircraft apparently arranged to exceed the above described drawback is the *GL-10 Greased Lightning* the NASA, wherein a plurality of electric propellers for each wing is provided. However the problems above exposed are not solved for the tail of the aircraft.

Furthermore, both the *GL-10 Greased Lightning* both the aircrafts shown in ITT020130249 and in US20110001020, as well as all the convertiplanes present in prior art, have an aerodynamic efficiency very low in cruise phase, joined to a low stability in maneuver phase. This can result a substantial problem, especially in case that the aircraft is not a small drone, but a plane single-seater or larger.

### Summary of the invention

It is therefore a feature of the present invention to provide a convertiplane having a high stability during the wing tilting.

It is also a feature of the present invention to provide a convertiplane that provides a high maneuverability, especially in pitching phase.

It is a further feature of the present invention to provide a convertiplane that provides a high reliability in case of failure of the motors.

It is still a feature of the present invention to provide a convertiplane that provides a high aerodynamic efficiency and then low consumption in cruise phase.

These and other objects are achieved by a convertiplane structure having a longitudinal axis x and a plane π orthogonal to it, said structure comprising:
- a main wing arranged to rotate about at least one transversal rotation axis y;
- an auxiliary wing, which is located back with respect to main wing, and arranged to rotate about at least one transversal rotation axis y';
- at least two main propellers located on the main wing;
- at least two auxiliary propellers located on the auxiliary wing (130);
whose main feature is that the auxiliary wing is located at a vertical height higher than the main wing,
and that two vertical wings are also provided located in such a way that the projections on the plane π of the main wing, of the auxiliary wing and of the vertical wings shape a closed polygon, thus reducing the induced drag and increasing the overall aerodynamic efficiency.

The present invention thus provides to apply to a convertiplane the aerodynamic configuration so-called "Best Wing System", i.e. an aerodynamic system that shapes, in frontal projection, a closed polygon. This allows the convertiplane of the present invention to significantly increase the flight range, as it increases the aerodynamic efficiency and reduces the energy consumption.

Advantageously, on the main wing and on the auxiliary wing are located, respectively, at least six main propellers and at least six auxiliary propellers. Such particular exemplary embodiment, increasing the number of propellers with respect to the convertiplanes of the prior art, makes it possible to install propellers with shorter blades. This way, under a same propulsion demand, the propellers create a lower gyroscopic effect, increasing the stability of the fuselage during wings tilting.

In particular, the main propellers and the auxiliary propellers are located, respectively, on the back of the main wing and of the auxiliary wing, in order to create a depression above the wings arranged to increase the lift. In particular, the fact of having a plurality of propellers of reduced size produces an increase of lift distributed and uniform on the wings, maintaining low, at the same time, the drag offered to the air flow.

Advantageously, a central fuselage is also provided connected to main wing and arranged to contain a load and/or a crew.

In particular, the vertical wings are connected to the auxiliary wing at the lateral ends of the latter.

Advantageously, at least two elongated side elements are provided, arranged to connect the vertical wings to main wing, on which are arranged two auxiliary fuselages. This way, it is possible to distribute the payload and the structural weights (such as batteries, fuel, systems, etc.) between the various fuselages, reducing the tensional status of the wings.

In particular, the vertical wings are arranged to connect the lateral ends of the main wing to the lateral ends of the auxiliary wing. Such solution, connecting directly the horizontal wings increases the structural resistance of the aircraft.

Advantageously, the vertical wings are twisted in a linear way, in order to have on the lower basis the same wing profile of the main wing, rotated by 90°, and to have on the upper basis the same wing profile of the auxiliary wing, rotated by 90°. This way, it is maximized the aerodynamic efficiency of the configuration "Best Wing System".

In particular, the main wing comprises a fixed central portion and two movable side portions arranged to rotate, regardless of each other, about two transversal rotation axes y.

In particular, the auxiliary wing comprises a fixed central portion and two movable side portions arranged to rotate, regardless of each other, about two transversal rotation axes y'.

Advantageously, at the fixed central portion of the auxiliary wing a third vertical wing is provided having a symmetric aerodynamic profile as cross section.

In particular, the main wing and/or the auxiliary wing have a dihedral angle different from zero.

In particular, the main wing and/or the auxiliary wing have a sweep angle different from zero.

In particular, the main wing and/or the auxiliary wing have a taper ratio different from 1.

Advantageously, the horizontal wings comprise end portions that extend laterally beyond the vertical wings.

In particular, the vertical and horizontal wings shape a closed rectangle in case of straight wings. They shape instead an irregular hexagon in case of wings with dihedral angle.

Advantageously, each vertical wing comprises:
- a front portion which is integrally connected to the main wing;
- an intermediate portion pivotally connected to the front portion by a first hinge;
- a rear portion pivotally connected to the intermediate portion by a second hinge and to auxiliary wing by a third hinge;
said vertical wing being configured in such a way that, when the main wing rotates about its transversal rotation axis y, the front portion rotates integrally to the vertical wing and causes a rotation of the intermediate portion, of the rear portion and of the auxiliary wing by the constraints imposed by the hinges.

This way, the rotation of the main wing, through the kinematical chain defined by the hinges, brings in rotation also the auxiliary wing. In this exemplary embodiment, therefore, it is possible to dispense the actuator that brings in rotation the auxiliary wing, reducing the weight and the encumbrance of the convertiplane.

Furthermore, in the vertical flight configuration the intermediate portions of the vertical wings rest on the ground, providing a support for convertiplane and avoiding the weight and the encumbrance that would be given by a dedicated landing gear.

In this exemplary embodiment, in case that a central fuselage is provided, it comprises a fixed portion and a movable portion pivotally connected to each other by a fourth hinge. This way, when the main wing rotates about its transversal rotation axis y, the movable portion rotates about the fourth hinge in order to allow the vertical wing to bring in rotation the auxiliary wing by the constraints imposed by the hinges.

### Brief description of the drawings

Further characteristic and/or advantages of the present invention are more bright with the following description of an exemplary embodiment thereof, exemplifying but not limitative, with reference to the attached drawings in which:
- Fig. 1 shows, in perspective, an exemplary embodiment of the convertiplane structure according to the present invention;
- Fig. 2A shows a front view of the exemplary embodiment of Fig. 1;
- Fig. 2B shows a plan view of the exemplary embodiment of Fig. 1;
- Fig. 3A shows, in front view, an exemplary embodiment where the wings have dihedral angle different from zero;
- Fig. 3B shows, in plan view, the exemplary embodiment where the wings have sweep angle different from zero;
- Fig. 4A shows, in side view, an exemplary embodiment of the convertiplane, in the horizontal flight configuration, where the vertical wing comprises three separable portions;
- Fig. 4B shows a plan view of the exemplary embodiment of Fig. 4A;
- Fig. 5A shows a side view of the exemplary embodiment of Fig. 4A in the vertical flight configuration;
- Fig. 5B shows a plan view of the exemplary embodiment of Fig. 5A.

### Description of a preferred exemplary embodiment

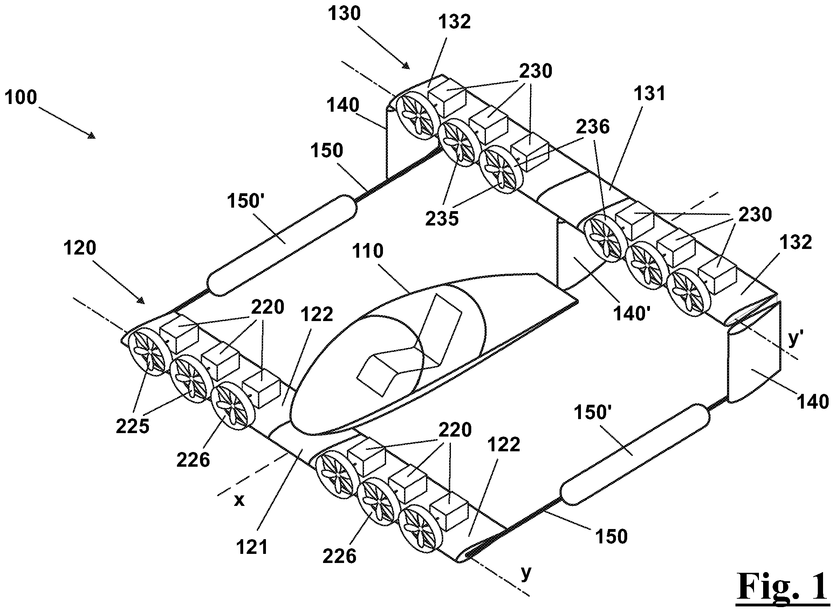

With reference to Fig. 1, in a preferred exemplary embodiment, the convertiplane structure 100, according to the invention, comprises a main wing 120 and an auxiliary wing 130.

In particular, the main wing 120 comprises a fixed central portion 121 and two movable side portions 122 arranged to rotate, regardless of each other, about two transversal rotation axes y parallel to each other. Similarly, the auxiliary wing 130 comprises a fixed central portion 131 and two movable side portions 132 arranged to rotate, regardless of each other, about two transversal rotation axes y' parallel to each other.

Defining the longitudinal axis x as the axis of the convertiplane 100 in the conveying direction, the two rotation axes y and y' are substantially perpendicular to it. In particular, the wings 120, 130 are adapted to switch between a vertical configuration, during the take-off, the landing and the stationing in flight, and a substantially horizontal configuration, during the cruise.

Each of the two wings 120,130 comprises at least two propellers 220,230 arranged to provide the thrust to the aircraft during the cruise and the lift during the take-off, the landing and the stationing in flight. In particular, in an exemplary embodiment of Fig. 1 a plurality of main propellers 220 for main wing 120 and a plurality of auxiliary propellers 230 for auxiliary wing 130 are provided.

With respect to a traditional configuration of the prior art, where the propellers are normally in such a number as to be very spaced apart, in the configuration of Fig. 1 the propellers 220,230 are 6 for each wing and are located at the limit of the overlapping. This allows, under a same power demand with respect to an aircraft of the prior art, to have more propellers but with shorter blades, reducing the gyroscopic effect generated. Such aspect is extremely useful during the tilting of the wings 120,130 in order to switch from the vertical configuration to the horizontal flight one, since, during this operation a too high tenacity of the gyroscopic axis risks to create strong instability to the aircraft, arriving to the extreme possibility in which, instead of the wing, it rotates the rest of the aircraft.

In an exemplary embodiment of the present invention, the propellers 220 comprise blades 225 and protections 226, whereas the propellers 230 comprise blades 235 and protections 236. The protections 226,236 allow to protect the blades 225,235 from accidental impacts, and this aspect is useful especially in case of remotely actuated aircrafts. Furthermore, providing to the blades 225,235 appropriate aerodynamic profiles, the protections 226,236 allow to realize ducted propellers, which have higher performances than the open propellers, especially at low speeds.

Fig. 1 shows furthermore the presence of two vertical wings 140 located at the ends 135 of the auxiliary wing 130.

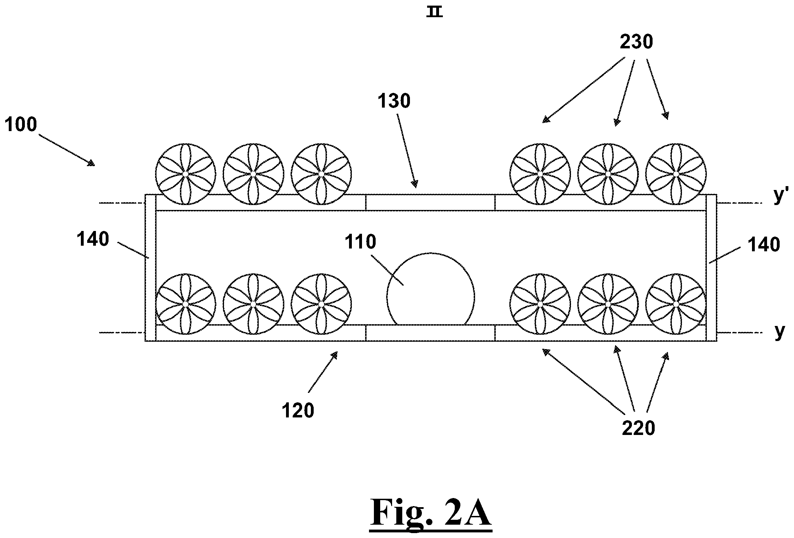

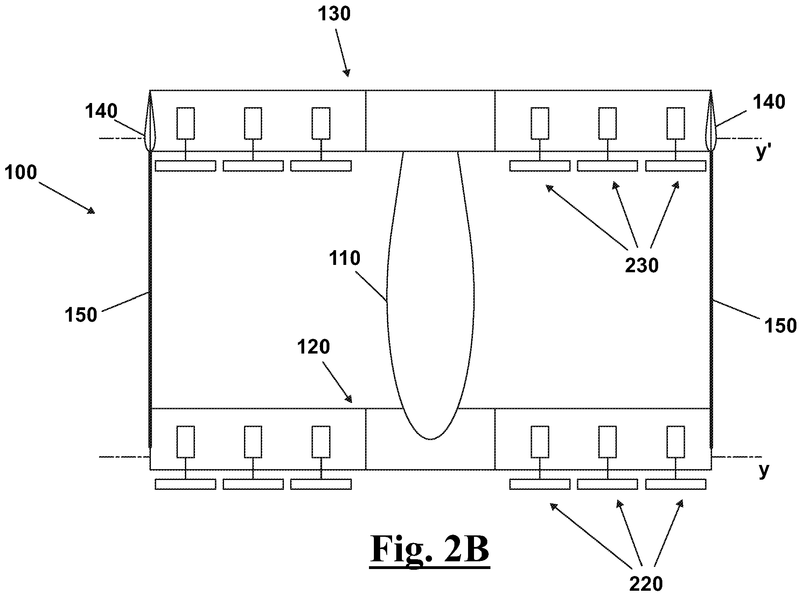

With reference even to Fig. 2A, considering a plane π orthogonal to axis x, the present invention provides that the two wings 140 are located in such a way that the projections of the wings 120,130,140 in the plane π shape a closed polygon, in particular a rectangle in an exemplary embodiment of Fig. 1. This way, the induced drag of the wings 120 and 130 is very reduced, increasing the overall aerodynamic efficiency.

More in detail, the aerodynamic configuration realized by the present invention refers to the so-called "PrandtlPlane" configuration, in which it is introduced the concept of "Best Wing System", of L. Prandtl, i.e. a system constituted by two horizontal wings and two vertical wings in order to form a box in front view. In the above described aerodynamic configuration, the induced speed is constant along the horizontal wings, while it is identically zero on the vertical wings. As said, then, this configuration ensures, under a same weight and wing opening, the minimum induced drag among all the possible lifting systems.

With reference to Fig. 1, in an exemplary embodiment of the present invention a central fuselage 110 is provided connected before the main wing 120, and in particular to the fixed central portion 121. In this configuration, the auxiliary wing 130 allows stabilizing the central fuselage 110 during the rotation of the wings 120,130 and during the various flight maneuvers.

Still with reference to Fig. 1, in an exemplary embodiment of the present invention two elongated side elements 150 are provided that connect the lower base of the vertical wings 140 with the lateral ends of the main wing 120, in order to increase the structural resistance of the aircraft.

Furthermore, on the elongated side elements 150 can be arranged two auxiliary fuselages 150' that allow to distribute the payload and the structural weights, such as, for example, batteries, fuel, plants or other. The distribution of the load allows to lighten both the fuselage 110 both the horizontal wings 120,130, reducing the tensions to which they are subjected both due to aerodynamic forces and for the rotation about axes y and y'.

The present invention provides also an exemplary embodiment in which only the auxiliary fuselages 150' and not the central fuselage 110 are provided. Such configuration is particularly interesting when the convertiplane 100 is used as remote-controlled drone, with no pilot on board.

In a further exemplary embodiment, not shown in the figures, the horizontal wings 120,130 can be both biplane.

The connection between the auxiliary wing 130 and the vertical wings 140 can be made by means of juncture that connect the rods about which the wings 130,140 carry out the rotations.

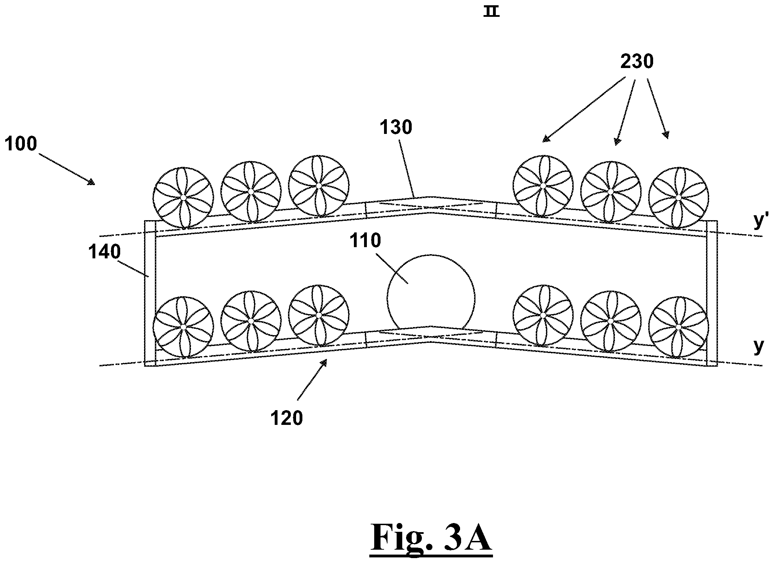

With reference to Fig. 3A, wings 120 and 130 may have a dihedral angle. The polygon which the projections of the wings 120,130,140 shape in the plane n, in this case, is an irregular hexagon. Furthermore, the transversal rotation axes y and y' are not parallel to each other, but intersecting.

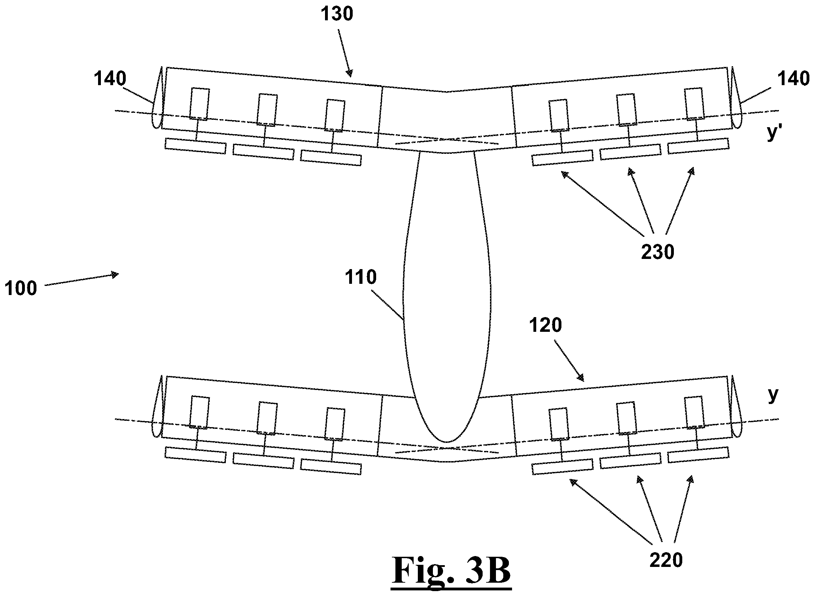

With reference to Fig. 3B, wings 120,130 may have a sweep angle, usually with a limited value due to low speed of this kind of aircraft. In this case the polygon which the projections of the wings 120,130,140 shape in the plane π remains a rectangle and there are no variations in the aerodynamic efficiency with respect to the configuration of Fig. 1.

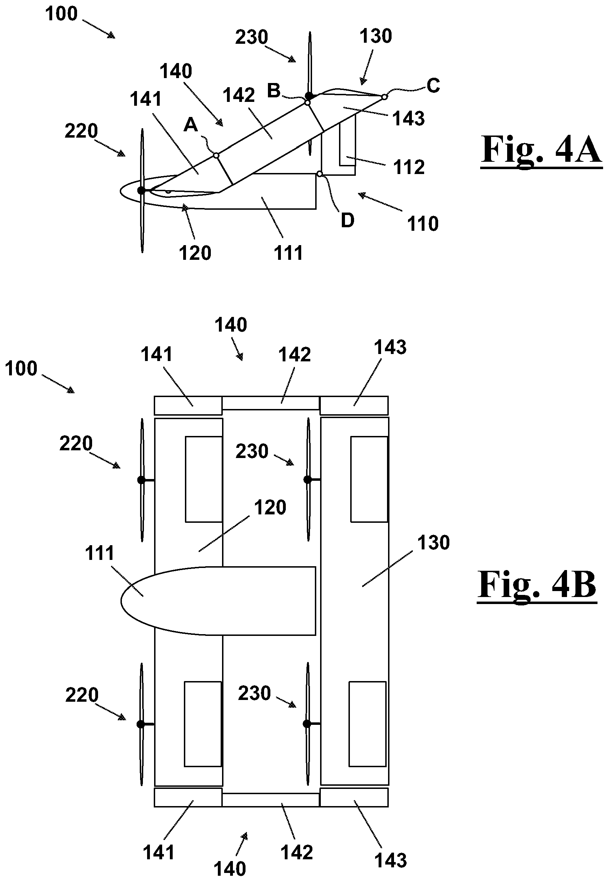

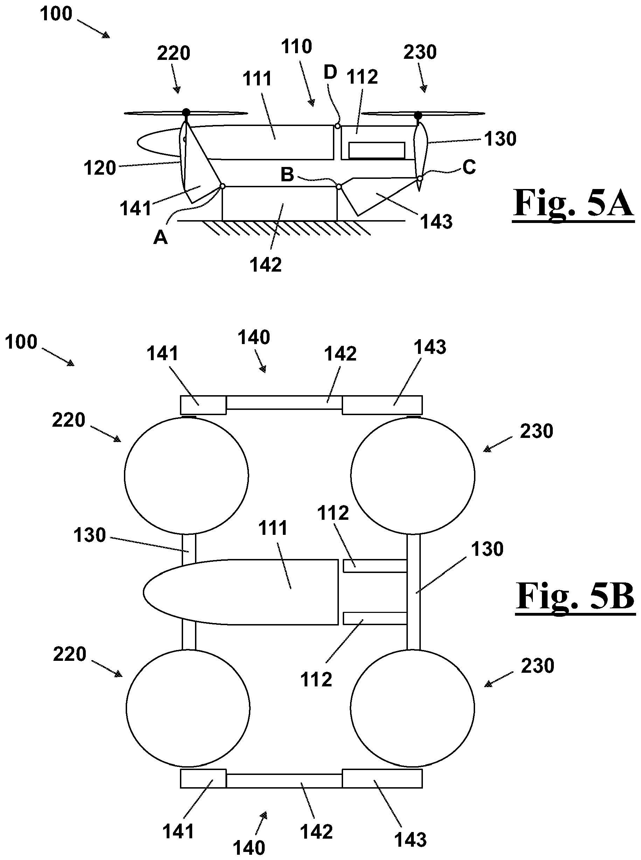

In the figures 4A, 4B, 5A and 5B an exemplary embodiment of the present invention is shown wherein each vertical wing 140 comprises a front portion 141, an intermediate portion 142 and a rear portion 143.

In particular, the front portion 141 is integrally connected to the main wing 120, whereas the rear portion 143 is pivotally connected to the auxiliary wing 130 by the hinge C. The intermediate portion 142 is then pivotally connected to the front portion 141 and the rear portion 143 by means, respectively, of the hinges A and B.

Furthermore, the central fuselage 110 comprises a fixed portion 111 and a movable portion 112, hinged to the fixed portion 111 by the hinge D, which can comprise one or more aerodynamic surfaces that can work as vertical fins during the horizontal flight.

When the convertiplane 100 is in the horizontal flight configuration (Fig. 4A and 4B), portions 141, 142 and 143 of the vertical wings 140 are aligned to each other, whereas the two movable portions 112 of the central fuselage 110 are substantially perpendicular with respect to the fixed portion 111. When convertiplane 100 switches to the vertical flight configuration, the main wing 120 rotates about its transversal rotation axis y and brings in rotation the intermediate portion 142, the rear portion 143 and the auxiliary wing 130 by the constraints imposed by the hinges A,B,C. At the same time, the two movable portions 112 of the central fuselage 110 rotate about the hinge D placing as shown in Figs. 5A and 5B.

This way, the rotation of the main wing 120, by the kinematical chain defined by the hinges A, B and C, brings in rotation also the auxiliary wing 130. In this exemplary embodiment, therefore, it is possible to dispense the actuator that brings in rotation the auxiliary wing 130, reducing the weight and the encumbrance of the convertiplane 100.

Furthermore, in the vertical flight configuration the intermediate portions 142 of the vertical wings 140 rest on the ground, providing a support for convertiplane 100 and avoiding the weight and the encumbrance that would be given by a dedicated landing gear.

The foregoing description of some exemplary specific embodiments will so fully reveal the invention according to the conceptual point of view, so that others, by applying current knowledge, will be able to modify and/or adapt in various applications the specific exemplary embodiments without further research and without departing from the scope of the invention as defined by the attached claims.

It is to be understood that the phraseology or terminology that is employed herein is for the purpose of description and not of limitation.

## Claims

1. A convertiplane structure (100) having a longitudinal axis x and a plane π orthogonal to it, said structure (100) comprising:
- a main wing (120) arranged to rotate about at least one transversal rotation axis y;
- an auxiliary wing (130), which is located back with respect to said main wing (120), and arranged to rotate about at least one transversal rotation axis y' ;
- at least two main propellers (220) located on said main wing (120);
- at least two auxiliary propellers (230) located on said auxiliary wing (130);
**characterized in that** said auxiliary wing (130) is located at a vertical height bigger than said main wing (120),
and **in that** two vertical wings (140) are also provided located in such a way that the projections on said plane π of said main wing (120), of said auxiliary wing (130) and of said vertical wings (140) shape a closed polygon, thus reducing the induced drag and increasing the overall aerodynamic efficiency.

2. The convertiplane structure (100), according to claim 1, wherein on said main wing (120) and on said auxiliary wing (130) are located, respectively, at least six main propellers (220) and at least six auxiliary propellers (230) .

3. The convertiplane structure (100), according to claim 1, wherein said main propellers (220) and said auxiliary propellers (230) are located, respectively, on the back of said main wing (120) and of said auxiliary wing (130), said main propellers (220) and said auxiliary propellers (230) configured to create a depression above said wings (120,130) arranged to increase the lift.

4. The convertiplane structure (100), according to claim 1, wherein a central fuselage (110) is also provided connected to said main wing (120) and arranged to contain a load and/or a crew.

5. The convertiplane structure (100), according to claim 1, wherein said vertical wings (140) are connected to said auxiliary wing (130).

6. The convertiplane structure (100), according to claim 1, wherein at least two elongated side elements (150) are provided arranged to connect said vertical wings (140) to said main wing (120), and wherein on said elongated side elements (150) are located two auxiliary fuselages (150').

7. The convertiplane structure (100), according to claim 1, wherein said vertical wings (140) are shaped in such way that they have on the lower basis the same wing profile of said main wing (120), rotated by 90°, and on the upper basis the same wing profile of said auxiliary wing (130), rotated by 90°.

8. The convertiplane structure (100), according to claim 1, wherein said main wing (120) comprises a fixed central portion (121) and two movable side portions (122) arranged to rotate, independently of each other, about two transversal rotation axes y.

9. The convertiplane structure (100), according to claim 1, wherein said auxiliary wing (130) comprises a fixed central portion (131) and two movable side portions (132) arranged to rotate, independently of each other, about two transversal rotation axes y'.

10. The convertiplane structure (100), according to claim 1, wherein said main wing (120) and/or said auxiliary wing (130) have at least one of:
- an dihedral angle different from zero;
- an sweep angle different from zero;
- a taper ratio different from 1.

11. The convertiplane structure (100), according to claim 1, wherein each vertical wing (140) comprises:
- a front portion (141) integrally connected to said main wing (120);
- an intermediate portion (142) pivotally connected to said front portion (141) by a first hinge (A);
- a rear portion (143) pivotally connected to said intermediate portion (142) by a second hinge (B) and to said auxiliary wing (130) by a third hinge (C);
said vertical wing (140) being configured in such a way that, when said main wing (120) rotates about said transversal rotation axis y, said front portion (141) rotates integrally to said vertical wing (140) and causes a rotation of said intermediate portion (142), of said rear portion (143) and of said auxiliary wing (130) by the constraints imposed by said hinges (A,B,C).

12. The convertiplane structure (100), according to claims 4 and 11, wherein said central fuselage (110) comprises a fixed portion (111) and a movable portion (112) pivotally connected to each other by a fourth hinge (D), said central fuselage (110) being configured in such a way that, when said main wing (120) rotates about said transversal rotation axis y, said movable portion (112) rotates about said fourth hinge (D) in order to allow said vertical wing (140) to bring in rotation said auxiliary wing (130) by the constraints imposed by said hinges (A,B,C).

## Patentansprüche

1. Wandelflugzeugstruktur (100) aufweisend eine Längsachse x und eine Ebene Π, die rechtwinklig zu dieser ist, wobei die Struktur (100) Folgendes umfasst:
- einen Hauptflügel (120), der dazu angeordnet ist, sich um mindestens eine transversale Drehachse y zu drehen;
- einen Hilfsflügel (130), der sich hinten in Bezug auf den Hauptflügel (120) befindet, und dazu angeordnet ist, sich um mindestens eine transversale Drehachse y' zu drehen;
- mindestens zwei Hauptpropeller (220), die sich auf dem Hauptflügel (120) befinden;
- mindestens zwei Hilfspropeller (230), die sich auf dem Hilfsflügel (130) befinden;
**dadurch gekennzeichnet, dass** sich der Hilfsflügel (130) an einer vertikalen Höhe befindet, die höher als der Hauptflügel (120) ist,
und **dass** zwei vertikale Flügel (140) auch bereitgestellt sind, die so liegen, dass die Projektionen der Ebene Π des Hauptflügels (120), des Hilfsflügels (130) und der vertikalen Flügel (140) ein geschlossenes Polygon bilden, und somit der induzierte Luftwiderstand reduziert wird und die gesamte aerodynamische Effizienz erhöht wird.

2. Wandelflugzeugstruktur (100) nach Anspruch 1, wobei sich auf dem Hauptflügel (120) und auf dem Hilfsflügel (130) mindestens sechs Hauptpropeller (220) bzw. mindestens sechs Hilfspropeller (230) befinden.

3. Wandelflugzeugstruktur (100) nach Anspruch 1, wobei sich die Hauptpropeller (220) und die Hilfspropeller (230) auf der Rückseite des Hauptflügels (120) bzw. des Hilfsflügels (130) befinden, wobei die Hauptpropeller (220) und die Hilfspropeller (230) dazu ausgestaltet sind, einen Unterdruck oberhalb der Flügel (120,130) zu erzeugen, die dazu angeordnet sind, den Auftrieb zu vergrößern.

4. Wandelflugzeugstruktur (100) nach Anspruch 1, wobei ein zentraler Rumpf (110) auch bereitgestellt ist, der mit dem Hauptflügel (120) verbunden ist und dazu angeordnet ist, eine Ladung und/oder Besatzung zu enthalten.

5. Wandelflugzeugstruktur (100) nach Anspruch 1, wobei die vertikalen Flügel (140) mit dem Hilfsflügel (130) verbunden sind.

6. Wandelflugzeugstruktur (100) nach Anspruch 1, wobei mindestens zwei längliche Seitenelemente (150) bereitgestellt sind, die dazu angeordnet sind, die vertikalen Flügel (140) mit dem Hauptflügel (120) zu verbinden, und wobei sich auf den länglichen Seitenelementen (150) zwei Hilfsrümpfe (150') befinden.

7. Wandelflugzeugstruktur (100) nach Anspruch 1, wobei die vertikalen Flügel (140) so geformt sind, dass sie an der unteren Basis das gleiche Flügelprofil des Hauptflügels (120), um 90° gedreht, und an der oberen Basis das gleiche Flügelprofil des Hilfsflügels (130), um 90° gedreht, aufweisen.

8. Wandelflugzeugstruktur (100) nach Anspruch 1, wobei der Hauptflügel (120) einen fixierten mittleren Abschnitt (121) und zwei bewegbare Seitenabschnitte (122), die dazu angeordnet sind, sich unabhängig voneinander um zwei transversale Drehachsen y zu drehen, umfasst.

9. Wandelflugzeugstruktur (100) nach Anspruch 1, wobei der Hilfsflügel (130) einen fixierten mittleren Abschnitt (131) und zwei bewegbare Seitenabschnitte (132), die dazu angeordnet sind, sich unabhängig voneinander um zwei transversale Drehachsen y' zu drehen, umfasst.

10. Wandelflugzeugstruktur (100) nach Anspruch 1, wobei der Hauptflügel (120) und/oder der Hilfsflügel (130) mindestens einen von Folgenden aufweisen:
- ein von Null verschiedener V-Winkel;
- ein von Null verschiedener Pfleilwinkel;
- ein von 1 verschiedenes Zuspitzungsverhältnis.

11. Wandelflugzeugstruktur (100) nach Anspruch 1, wobei jeder vertikale Flügel (140) Folgendes umfasst:
- einen Frontabschnitt (141), der einstückig mit dem Hauptflügel (120) verbunden ist;
- einen mittleren Abschnitt (142), der schwenkbar mit dem Frontabschnitt (141) durch ein erstes Drehgelenk (A) verbunden ist;
- einen hinteren Abschnitt (143), der schwenkbar mit dem mittleren Abschnitt (142) durch ein zweites Drehgelenk (B) und mit dem Hilfsflügel (130) durch ein drittes Drehgelenk (C) verbunden ist;
wobei der vertikale Flügel (140) so ausgestaltet ist, dass, wenn sich der Hauptflügel (120) um die transversale Drehachse y dreht, sich der Frontabschnitt (141) vollständig zum vertikalen Flügel (140) dreht und eine Drehung des mittleren Abschnitts (142), des hinteren Abschnitts (143) und des Hilfsflügels (130) durch die Beschränkungen, die durch die Drehgelenke (A,B,C) auferlegt werden, bewirkt.

12. Wandelflugzeugstruktur (100) nach Anspruch 4 und 11, wobei der zentrale Rumpf (110) einen fixierten Abschnitt (111) und einen bewegbaren Abschnitt (112) umfasst, die schwenkbar miteinander durch eine viertes Drehgelenk (D) verbunden sind, wobei der zentrale Rumpf (110) so ausgestaltet ist, dass, wenn sich der Hauptflügel (120) um die transversale Drehachse y dreht, sich der bewegbare Abschnitt (112) um das vierte Drehgelenk (D) dreht, um zu ermöglichen, dass der vertikale Flügel (140) den Hilfsflügel (130) durch die Beschränkungen, die durch die Drehgelenke (A,B,C) auferlegt werden, in Drehung bringt.

## Revendications

1. Structure d'avion convertible (100) possédant un axe longitudinal x et un plan π perpendiculaire à cet axe, ladite structure (100) comprenant :
- une aile principale (120) agencée pour tourner autour d'au moins un axe de rotation transversal y ;
- une aile auxiliaire (130), située postérieurement à ladite aile principale (120), et agencée de façon à tourner autour d'au moins un axe de rotation transversal y' ;
- au moins deux hélices principales (220) situées sur ladite aile principale (120) ;
- au moins deux hélices auxiliaires (230) situées sur ladite aile auxiliaire (130) ;
**caractérisée en ce que** ladite aile auxiliaire (130) est située à une hauteur verticale supérieure à celle de ladite aile principale (120) et
**en ce que** la structure comprend également deux ailes verticales (140) positionnées de sorte que la forme des saillies sur ledit plan π de ladite aile principale (120), de ladite aile auxiliaire (130), et desdites ailes verticales (140) est celle d'un polygone fermé, en réduisant ainsi la traînée induite, et en augmentant le rendement aérodynamique global.

2. Structure d'avion convertible (100) selon la revendication 1, dans laquelle sont situées, sur ladite aile principale (120) et ladite aile auxiliaire (130), au moins six hélices principales (220) et au moins six hélices auxiliaires (230) respectivement.

3. Structure d'avion convertible (100) selon la revendication 1, dans laquelle lesdites hélices principales (220) et lesdites hélices auxiliaires (230) sont situées, respectivement, sur le dos de ladite aile principale (120) et de ladite aile auxiliaire (130), lesdites hélices principales (220) et lesdites hélices auxiliaires (230) étant configurées pour créer, au-dessus desdites ailes (120,130), un creux agencé pour accroître la portance.

4. Structure d'avion convertible (100) selon la revendication 1, comprenant également un fuselage central (110) connecté à ladite aile principale (120), et agencé pour contenir une charge et/ou un équipage.

5. Structure d'avion convertible (100) selon la revendication 1, lesdites ailes verticales (140) étant raccordées à ladite aile auxiliaire (130).

6. Structure d'avion convertible (100) selon la revendication 1, comprenant au moins deux éléments latéraux allongés (150) agencés pour raccorder lesdites ailes verticales (140) à ladite aile principale (120), et deux fuselages auxiliaires (150') étant situés sur lesdits éléments latéraux allongés (150).

7. Structure d'avion convertible (100) selon la revendication 1, lesdites ailes verticales (140) étant façonnées de façon à présenter, sur la base inférieure, le même profil d'aile que ladite aile principale (120), tourné de 90°, et, sur la base supérieure, le même profil d'aile que ladite aile auxiliaire (130), tourné de 90°.

8. Structure d'avion convertible (100) selon la revendication 1, ladite aile principale (120) comprenant une partie centrale fixe (121) et deux parties latérales mobiles (122) agencées pour tourner, indépendamment l'une de l'autre, autour de deux axes de rotation transversaux y.

9. Structure d'avion convertible (100) selon la revendication 1, ladite aile auxiliaire (130) comprenant une partie centrale fixe (131) et deux parties latérales mobiles (132) agencées pour tourner, indépendamment l'une de l'autre, autour de deux axes de rotation transversaux y'.

10. Structure d'avion convertible (100) selon la revendication 1, ladite aile principale (120) et/ou ladite aile auxiliaire (130) présentant au moins un des suivants :
- un angle dièdre différent de zéro ;
- un angle de flèche différent de zéro ;
- une conicité différente de 1.

11. Structure d'avion convertible (100) selon la revendication 1, chaque aile verticale (140) comprenant :
- une partie antérieure (141) raccordée de façon intégrale à ladite aile principale (120) ;
- une partie intermédiaire (142) raccordée de façon pivotante à ladite partie antérieure (141) par une première charnière (A) ;
- une partie postérieure (143) raccordée de façon pivotante à ladite partie intermédiaire (142) par une deuxième charnière (B), et à ladite aile auxiliaire (130) par une troisième charnière (C) ; ladite aile verticale (140) étant configurée de sorte que lors de la rotation de ladite aile principale (120) autour dudit axe de rotation transversal y, ladite partie antérieure (141) tourne de façon intégrale sur ladite aile verticale (140), en causant une rotation de ladite partie intermédiaire (142), de ladite partie postérieure (143), et de ladite aile auxiliaire (130) sous l'effet des contraintes imposées par lesdites charnières (A,B,C).

12. Structure d'avion convertible (100) selon les revendications 4 et 11, ledit fuselage central (110) comprenant une partie fixe (111) et une partie mobile (112) raccordées de façon pivotante l'une à l'autre par une quatrième charnière (D), ledit fuselage central (110) étant configuré de sorte que lors de la rotation de ladite aile principale (120) autour dudit axe de rotation transversal y, ladite partie mobile (112) tourne autour de ladite quatrième charnière (D), afin de permettre à ladite aile verticale (140) de mettre en rotation ladite aile auxiliaire (130) sous l'effet des contraintes imposées par lesdites charnières (A,B,C).
